# EUROPEAN PATENT APPLICATION

(11) **EP 3 825 947 A1**
(43) Date of publication of application: **26.05.2021**
(21) Application number: 19837690.7
(22) Date of filing: 17.04.2019
(51) Int. Cl.: G06Q 40/04

(54) **METHOD AND APPARATUS FOR DISTRIBUTING COPYRIGHT INCOME BASED ON BLOCK CHAIN**

(30) Priority: 18.07.2018 CN 201810792395
(71) Applicant: Advanced New Technologies Co., Ltd., George Town, Grand Cayman KY1-9008 (KY)
(72) Inventor: YANG, Xinying, Hangzhou, Zhejiang 311121 (CN)
(74) Representative: Bryn-Jacobsen, Caelia
(86) International application number: PCT/CN2019/083066
(87) International publication number: WO 2020/015409

(57) **Abstract**

Disclosed are blockchain-based method and device for distributing copyright earnings. A blockchain network includes a plurality of service nodes, and the plurality of service nodes use virtual resources as a transfer medium to perform copyright-related transfers. When any copyright-related transfer for a target work occurs, a portion of copyright earnings generated by the copyright-related transfer is regarded as an income of a publisher of the target work, and the remaining copyright earnings are reserved as virtual resources corresponding to the target work, which are used to distribute copyright earnings to a service node using the target work. For the service node using the target work, at least a portion of the virtual resources corresponding to the target work in the blockchain are distributed to the service node through a consensus mechanism in the blockchain network, such that virtual resources corresponding to the service node are increased.

## Description

### TECHNICAL FIELD

The present application relates to the technical field of information, and in particular to a method and device for distributing copyright earnings on the basis of a blockchain.

### BACKGROUND

As the market pays more and more attention to the copyright of works, copyright service platforms emerge as required. Creators of works can register as users on a copyright service platform, upload their works to the copyright service platform, conduct copyright-related transfers with other users, and obtain copyright income.

The copyright-related transfers refer to various transfer activities carried out based on the copyright of works. For example, a user A grants the copyright property rights (such as reproduction rights, distribution rights, adaptation rights, and performance rights) of a work created by himself/herself to a user B, and charges a copyright license fee. For another example, user B uses a work created by user A (such as for enjoyment and downloading) and pays a work usage fee to user A.

In practice, in order to encourage the use of works, a copyright service platform will distribute a portion of copyright earnings of works to users using the works. Specifically, when a server of the copyright service platform detects that a certain user uses a work, the server will add a portion of copyright earnings of the work used by the user to an account corresponding to a user ID of the user.

Accordingly, a more open and credible method of distributing copyright earnings to work users is needed.

### SUMMARY

In order to solve the problem that the existing method of distributing copyright earnings to work users is not open and credible enough, the present application provides a method and device for performing credit evaluation on work publishers on the basis of a blockchain. The technical solution is as follows:

According to the first aspect of embodiments of the present application, provided is a method of distributing copyright earnings on the basis of a blockchain, a blockchain network comprises a plurality of service nodes, the plurality of service nodes use virtual resources as a transfer medium to perform copyright-related transfers, and the method comprises:
when any copyright-related transfer for a target work occurs, determining a copyright earning amount generated by the copyright-related transfer, the target work being a work published by any service node to the blockchain;
determining a publisher share amount and a user share amount according to a pre-agreed copyright earning sharing rule and the copyright earning amount, a sum of the publisher share amount and the user share amount being not greater than the copyright earning amount;
determining the publisher share amount of virtual resources as a virtual resource increment corresponding to a publishing node and publishing the virtual resource increment corresponding to the publishing node to the blockchain, the publishing node being a service node publishing the target work; and
determining the user share amount of virtual resources as a virtual resource increment corresponding to the target work and publishing the virtual resource increment corresponding to the target work to the blockchain, wherein virtual resources corresponding to the target work are used to issue a reward to a service node using the target work.

According to the second aspect of the embodiments of the present application, provided is a device for distributing copyright earnings to a work user on the basis of a blockchain based on the above method of distributing copyright earnings, and the device is a node in the blockchain network;
the device comprises:
a determination and publishing module configured to: upon detecting that a target node performs a work use operation on the target work, determine at least a portion of virtual resources corresponding to the target work as a virtual resource increment corresponding to the target node and publish the virtual resource increment corresponding to the target node to the blockchain; and determine the at least a portion of virtual resources as a virtual resource decrement corresponding to the target work and publish the virtual resource decrement corresponding to the target work to the blockchain.

In the technical solution provided by the embodiments of the present application, a blockchain network comprises a plurality of service nodes, and the plurality of service nodes use virtual resources as a transfer medium to perform copyright-related transfers. When any copyright-related transfer for a target work occurs, a portion of copyright earnings generated by the copyright-related transfer is used as an income of a publisher of the target work, and the remaining copyright earnings are reserved as virtual resources corresponding to the target work, which can be to distribute copyright earnings to a service node using the target work. For the service node using the target work, at least a portion of the virtual resources corresponding to the target work in the blockchain are distributed to the service node through a consensus mechanism in the blockchain network, such that virtual resources corresponding to the service node are increased. The process of distributing copyright earnings to a service node using the target work is implemented under the participation of a plurality of nodes in the blockchain network through a consensus mechanism. Moreover, records about distributing copyright earnings to a service node are stored in the blockchain by the plurality of nodes for public announcement, and the data stored in the blockchain cannot be tampered with. Accordingly, in the embodiments of the present application, the process of distributing copyright earnings to a work user is open, and records about distributing copyright earnings to a work user are credible.

It should be understood that the above general description and the following detailed description are only exemplary and explanatory, and should not limit the embodiments of the present application.

In addition, any of the embodiments of the present application is not required to achieve all of the above effects.

### BRIEF DESCRIPTION OF THE DRAWINGS

In order to more clearly describe the technical solutions in the embodiments of the present application or the prior art, the drawings needed in the description of the present application or the prior art will be briefly introduced below. Apparently, the drawings in the description below are only some embodiments of the present application, and those skilled in the art can obtain other drawings according to these drawings.
FIG. 1 is a flowchart of a method of distributing copyright earnings on the basis of a blockchain provided by an embodiment of the present application.
FIG. 2 is a flowchart of a method of distributing copyright earnings to a work user on the basis of a blockchain provided by an embodiment of the present application.
FIG. 3 is a structural schematic diagram of a device for distributing copyright earnings on the basis of a blockchain provided by an embodiment of the present application.
FIG. 4 is a structural schematic diagram of a device for distributing copyright earnings to a work user on the basis of a blockchain provided by an embodiment of the present application.
FIG. 5 is a structural schematic diagram of a system for distributing copyright earnings on the basis of a blockchain provided by an embodiment of the present application.
FIG. 6 is a structural schematic diagram of a computer apparatus for configuring a method provided by an embodiment of the present application.

### DETAILED DESCRIPTION

At present, in the application scenarios of copyright services, in order to encourage the work use behaviors, a portion of copyright earnings are usually issued to work users. However, the existing method of distributing copyright earnings to work users is mainly implemented by servers of a copyright service platform, and the entire process of distributing copyright earnings is not open and transparent enough. Moreover, copyright earning distribution records stored on the servers of the copyright service platform and corresponding to respective work users may also be tampered with, and the situation in which the copyright service platform refuses to pay the work users often occurs. That is to say, this method of distributing copyright earnings to work users does not have high credibility, and does not provide strong incentives to the work users.

In order to solve this problem, the present application firstly provides a blockchain-based copyright-related transfer method, and then, based on the copyright-related transfer method, provides a method of distributing copyright earnings and a method of distributing copyright earnings to work users.

Specifically, in the blockchain-based copyright-related transfer method, a blockchain network includes a plurality of service nodes, the service nodes have the right to publish works to the blockchain, and a plurality of service nodes use virtual resources as a transfer medium to perform copyright-related transfers.

Further, the blockchain network also includes a management node, and the plurality of service nodes use virtual resources issued by the management node as a transfer medium to perform copyright-related transfers. Virtual resources corresponding to the respective service nodes can be exchanged into property through the management node.

A typical copyright-related transfer may be described as follows:

For a copyright-related transfer event corresponding to a target work, a payer node determines a payment amount, and the payer node is a service node corresponding to a user who uses or purchases the target work.

The payer node determines the payment amount of virtual resources as a virtual resource decrement corresponding to the payer node, and determines the payment amount of virtual resources as a virtual resource increment corresponding to a publisher node; the publisher node is a service node corresponding to a user who publishes the target work.

The payer node constructs a payment transfer including the determined virtual resource decrement corresponding to the payer node and the determined virtual resource increment corresponding to the publisher node, and publishes the payment transfer to the blockchain.

The virtual resources are actually electronic data, and the specific form thereof may be game currency, points, virtual goods, etc. For the convenience of description, in the following examples, the work is specifically a musical work, the virtual resources are specifically "TONs," and one unit of virtual resource is one TON. The designation "TON" originates from tone (musical tone, color tone). Ton itself also has the meaning of weight, symbolizing value and density, so is determined as the designation.

The payment amount specifically refers to the amount of virtual resources needed to use or purchase the target work, and can be preset by the publisher of the target work.

That is to say, in the above copyright-related transfer method, a payment transfer being published to the blockchain means that a work buyer or user pays virtual resources to a work publisher, and the virtual resource payment record is stored in the blockchain for public announcement.

Through the above copyright-related transfer method, a service node may pay virtual resources as a payer in some copyright-related transfer events, and receive virtual resources as a publisher in some other copyright-related transfer events. Virtual resource payment records corresponding to the respective copyright-related transfer events will be stored in the blockchain for public announcement. Based on the virtual resource payment records stored in the blockchain, the stock of virtual resources corresponding to each service node can be determined.

It should be noted that transfers described in the description may be property exchange activities in a common sense, such as copyright-related transfers (purchase of copyright works, use of copyright works, etc.). In addition, in the sense of blockchain, transfers may also refer to data created by users via clients of the blockchain and eventually published to a distributed database of the blockchain.

The transfers in the blockchain may be distinguished as narrow-sense transfers and broad-sense transfers. A narrow-sense transfer refers to a value transfer published by a user to the blockchain; for example, in a conventional Bitcoin blockchain network, a transfer may be an account transfer initiated by a user in the blockchain. A broad-sense transfer refers to service data with service intention published by a user to the blockchain; for example, an operator may build an consortium blockchain based on actual service needs, and deploy some other types of online services unrelated to value transfer (for example, a house-rental service, vehicle scheduling service, insurance claims service, credit service, medical service, etc.) relying on the consortium blockchain. In this consortium blockchain, a transfer may be a service message or service request with service intentions published by a user in the consortium blockchain.

Herein, except for the expressions of copyright-related transfers and copyright transfers, other "transfers" generally refer to transfers in the sense of a blockchain.

Based on the above copyright-related transfer method on the basis of a blockchain, the present application provides a method of distributing copyright earnings and a method of distributing copyright earnings to a work user. When any copyright-related transfer for a target work occurs, a portion of copyright earnings generated by the copyright-related transfer is used as an income of a publisher of the target work, and the remaining copyright earnings are reserved as virtual resources corresponding to the target work, which can be used to distribute copyright earnings to a service node using the target work. For the service node using the target work, at least a portion of the virtual resources corresponding to the target work in the blockchain is distributed to the service node through a consensus mechanism in the blockchain network, such that virtual resources corresponding to the service node are increased.

The process of distributing copyright earnings to the service node using the target work is implemented under the participation of a plurality of nodes in the blockchain network through a consensus mechanism. Moreover, records of distributing copyright earnings to the service node are stored in the blockchain by the plurality of nodes for public announcement, and the data stored in the blockchain cannot be tampered with. Accordingly, in the embodiments of the present application, the process of distributing copyright earnings to a work user is open, and the record of distributing copyright earnings to the work user is credible.

In order to enable those skilled in the art to better understand the technical solutions in the embodiments of the present application, the technical solutions in the present application will be described clearly and completely below with reference to the drawings in the present application. It is apparent that the described embodiments are merely some, rather than all, of the embodiments of the present application. All other embodiments obtained by those skilled in the art based on the embodiments in the present application shall fall within the scope of protection of the present application.

The technical solutions provided by embodiments of the present application will be described below in detail with reference to the drawings.

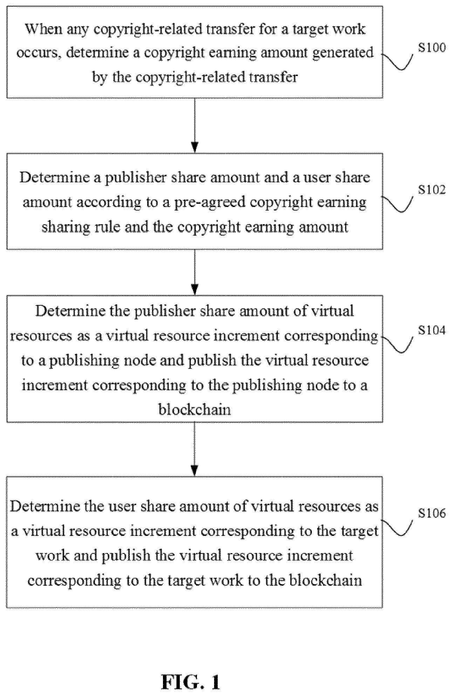

FIG. 1 is a flowchart of a method of distributing copyright earnings on the basis of a blockchain provided by an embodiment of the present application. The method includes the following steps:

S100: when any copyright-related transfer for a target work occurs, determining a copyright earning amount generated by the copyright-related transfer.

In an embodiment of the present application, a blockchain network includes a plurality of service nodes, the service nodes generally have the right to publish works to the blockchain, and the plurality of service nodes use virtual resources as a transfer medium to perform copyright-related transfers.

It should also be noted that virtual resource expenditure records and virtual resource income records of each service node are stored in the blockchain. For each service node, a virtual resource expenditure record corresponding to the service node is recorded in a form in which a node identifier of the service node corresponds to a certain virtual resource decrement, for example, "node A: -20," which means node A spends 20 TONs; a virtual resource income record corresponding to the service node is recorded in a form in which the node identifier of the service node corresponds to a certain virtual resource increment, for example, "node A: 20," which means node A earns 20 TONs.

In addition, for each service node, a stock of virtual resources corresponding to the service node may be obtained by tracing back the blockchain and combining virtual resource increments and virtual resource decrements corresponding to the service node. For example, there are three virtual resource expenditure records of node A stored in the blockchain, and the corresponding virtual resource decrements are respectively -20, -50 and -60; there are three virtual resource income records stored in the blockchain, and the corresponding virtual resource increments are respectively 50, 63 and 80. In sum, the stock of virtual resources corresponding to node A up to now is: - 20 - 50 - 60 + 50 + 63 + 80 = 63 TONs.

An executive subject of the method may be any service node (called execution node) in the blockchain network, and the execution node executes the method illustrated in FIG. 1 by calling a smart contract stored in the blockchain for implementing the flow of the method illustrated in FIG. 1. It should be noted that the execution node may be randomly assigned from the service nodes whenever the method illustrated in FIG. 1 needs to be executed.

In addition, a management node may be added to the blockchain network as the execution node. The management node does not participate in copyright-related transfers, but is responsible for managing copyright-related transfers. The management node usually executes the method illustrated in FIG. 1 by calling a smart contract stored in the blockchain for implementing the flow of the method illustrated in FIG. 1.

Moreover, the management node is generally an issuer of a transfer medium (i.e., virtual resources) used in copyright-related transfers. Any service node can request the management node to exchange virtual resources owned by the service node into property. For example, a stock of virtual resources of service node A is 20 TONs. Assuming that a management party corresponding to the management node stipulates that one TON can be converted into 10 RMB, then service node A can request the management node to exchange the 20 TONs owned by service node A into 200 RMB

In an embodiment of the present application, the target work is usually a work published by any service node to the blockchain. The copyright earning amount generated by the copyright-related transfer refers to an amount of virtual resources paid by a payer who uses or purchases a target work to a publisher of the target work.

S102: determining a publisher share amount and a user share amount according to a pre-agreed copyright earning sharing rule and the copyright earning amount.

In an embodiment of the present application, the copyright earning sharing rule may be pre-agreed upon in the smart contract according to requirements. The execution node may call the smart contract to distribute shares of the copyright earnings according to the copyright earning sharing rule.

The copyright earning sharing rule specifically may include a publisher share proportion and a user share proportion. It should be noted that this does not form a limitation to the present application. In fact, any rule capable of implementing copyright earning sharing between the user and the publisher can be used as the copyright earning sharing rule described herein.

By respectively multiplying the publisher share proportion and the user share proportion by the copyright earning amount, the publisher share amount and the user share amount can be obtained. Apparently, regardless of the copyright earning sharing rule being adopted, the sum of the publisher share amount and the user share amount is not greater than the copyright earning amount.

S 104: determining the publisher share amount of virtual resources as a virtual resource increment corresponding to a publishing node and publishing the virtual resource increment corresponding to the publishing node to the blockchain.

The publishing node is a service node publishing the target work. It should be noted that the executive subject (execution node) of the solution may also be the publishing node.

Through step S104, the publisher share amount of virtual resources is determined as an income of the publishing node, which is published to the blockchain.

S106: determining the user share amount of virtual resources as a virtual resource increment corresponding to the target work and publishing the virtual resource increment corresponding to the target work to the blockchain.

Since the service node using the target work is uncertain, and the time point at which any service node uses the target work is unpredictable, in step S106, it is necessary to reserve the user share amount in advance, that is, to establish a corresponding relationship between the user share amount of virtual resources and the target work, and store the corresponding relationship in the blockchain. In this way, the virtual resources corresponding to the target work can be used to distribute copyright earnings to a service node using the target work.

In addition, when the blockchain network further includes a management node, in addition to the publisher share proportion and the user share proportion, the copyright earning sharing rule further includes a manager share proportion. Usually, the sum of the publisher share proportion, the user share proportion, and the manager share proportion is 1.

Based on this, in an embodiment of the present application, the manager share proportion can be multiplied by the copyright earning amount to obtain the manager share amount; the manager share amount of virtual resources are determined as a virtual resource increment corresponding to the management node, and the virtual resource increment corresponding to the management node is published to the blockchain. Therefore, a portion of copyright earnings of the target work can also be distributed to the management node.

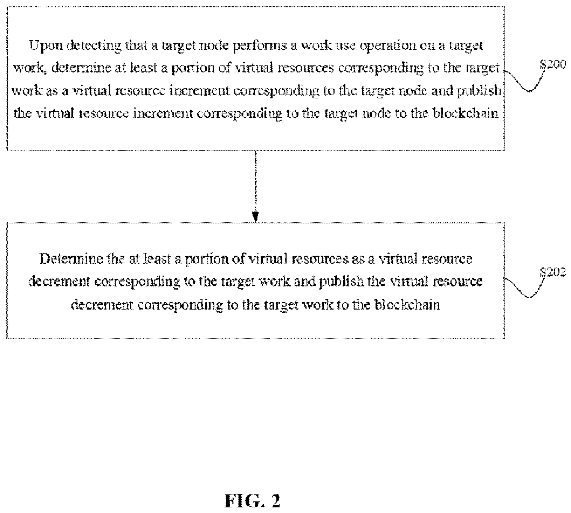

FIG. 2 is a method of distributing copyright earnings to a work user on the basis of a blockchain based on the method of distributing copyright earnings illustrated in FIG. 1. The method of distributing copyright earnings to the work user includes the following steps:

S200: upon detecting that a target node performs a work use operation on the target work, determining at least a portion of virtual resources corresponding to the target work as a virtual resource increment corresponding to the target node, and publishing the virtual resource increment corresponding to the target node to the blockchain.

S202: determining the at least a portion of virtual resources as a virtual resource decrement corresponding to the target work, and publishing the virtual resource decrement corresponding to the target work to the blockchain.

The executive subject of the solution may be the same as the executive subject in the method illustrated in FIG. 1.

In an embodiment of the present application, the target node is generally any service node. The target node may also be a specified service node.

It should be noted that, while at least a portion of virtual resources corresponding to the target work is determined as a virtual resource increment corresponding to the target node and published to the blockchain, the at least a portion of virtual resources should also be determined as a virtual resource decrement corresponding to the target work and be published to the blockchain. In this way, on one hand, based on the method of distributing copyright earnings illustrated in FIG. 1, as the copyright-related transfers for the target work continue to occur, virtual resources corresponding to the target work increase; on the other hand, based on the method of distributing copyright earnings to a work user illustrated in FIG. 2, as the work use operations for the target work continue to occur, virtual resources corresponding to the target work decrease.

In an embodiment of the present application, the virtual resource increment corresponding to the target node may be determined according to a preset determination rule.

The determination rule may be preset according to practical needs, which is not limited in the present application. For example, a specified proportion of virtual resources corresponding to the target work may be determined as the virtual resource increment corresponding to the target node.

For example, whenever a target node performs a work use operation on the target work, 1% of the stock may be determined as the virtual resource increment corresponding to the target node. Assuming that the stock of virtual resources corresponding to the target node is currently 100 TONs, 100 * 1% = 1 TON is determined as the virtual resource increment corresponding to the target node when the target node uses the target work for the first time, and 99 * 1% = 0.99 TONs is determined as the virtual resource increment corresponding to the target node when the target node uses the target work for the second time.

Further, in an embodiment of the present application, before the virtual resource increment corresponding to the target node is published to the blockchain, it may be determined that the work use operation satisfies a restriction condition pre-specified by a user corresponding to the publishing node.

For example, the restriction condition may be that the user corresponding to the target node listens to the target work for an hour. Then, the virtual resource increment corresponding to the target node is published to the blockchain only after the restriction condition is satisfied, and the target node can receive the distributed copyright earnings only then.

Further, in an embodiment of the present application, the virtual resource increment corresponding to the target node may be published to the blockchain according to a publishing rule pre-specified by a user corresponding to the publishing node.

For example, the virtual resource increment corresponding to the target node may be divided into several virtual resource sub-increments. The publishing rule may be that each time the user corresponding to the target node listens to the target work for one hour, a virtual resource sub-increment corresponding to the target node is published to the blockchain, until all the virtual resource sub-increments are published to the blockchain.

By adopting the methods illustrated in FIG. 1 and FIG. 2, when any copyright-related transfer for a target work occurs, a portion of copyright earnings generated by the copyright-related transfer is used as an income of the publisher of the target work, and the remaining copyright earnings are reserved as virtual resources corresponding to the target work, which are used to distribute copyright earnings to a service node using the target work. For the service node using the target work, at least a portion of the virtual resources corresponding to the target work in the blockchain is distributed to the service node through a consensus mechanism in the blockchain network, such that virtual resources corresponding to the service node are increased. The process of distributing copyright earnings to the service node using the target work is implemented under the participation of a plurality of nodes in the blockchain network through a consensus mechanism. Moreover, a record of distributing copyright earnings to the service node is stored in the blockchain by the plurality of nodes for public announcement, and the data stored in the blockchain cannot be tampered with. Accordingly, it can be seen that, in the embodiments of the present application, the process of distributing copyright earnings to a work user is open, and the record of distributing copyright earnings to the work user is credible.

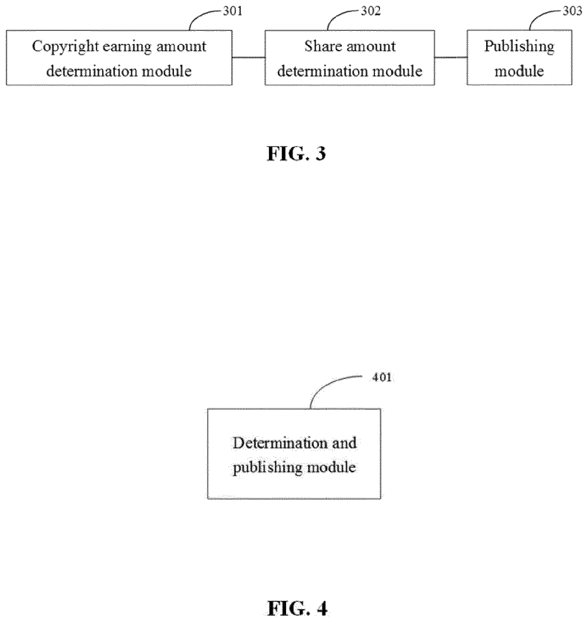

Based on the method of distributing copyright earnings illustrated in FIG. 1, an embodiment of the present application further provides a device for distributing copyright earnings on the basis of a blockchain, as illustrated in FIG. 3, wherein a blockchain network includes a plurality of service nodes, the plurality of service nodes use virtual resources as a transfer medium to perform copyright-related transfers, and the device is a node in the blockchain network.

The device includes:
a copyright earning amount determination module 301 configured to, when any copyright-related transfer for a target work occurs, determine a copyright earning amount generated by the copyright-related transfer;
a share amount determination module 302 configured to determine a publisher share amount and a user share amount according to a pre-agreed copyright earning sharing rule and the copyright earning amount, a sum of the publisher share amount and the user share amount being not greater than the copyright earning amount;
a publishing module 303 configured to: determine the publisher share amount of virtual resources as a virtual resource increment corresponding to a publishing node and publish the virtual resource increment corresponding to the publishing node to the blockchain, the publishing node being a service node publishing the target work; and determine the user share amount of virtual resources as a virtual resource increment corresponding to the target work and publish the virtual resource increment corresponding to the target work to the blockchain, the virtual resources corresponding to the target work being used to distribute copyright earnings to a service node using the target work.

The copyright earning sharing rule specifically includes:
a publisher share proportion and a user share proportion;
wherein the share amount determination module 302 is configured to respectively multiply the publisher share proportion and the user share proportion by the copyright earning amount to obtain the publisher share amount and the user share amount.

The blockchain network further includes a management node;
the copyright earning sharing rule further includes a manager share proportion;
the share amount determination module 302 is configured to: multiply the manager share proportion by the copyright earning amount to obtain a manager share amount; and determine the manager share amount of virtual resources as a virtual resource increment corresponding to the management node and publish the virtual resource increment corresponding to the management node to the blockchain.

Based on the method of distributing copyright earnings to a work user on the basis of a blockchain illustrated in FIG. 2, an embodiment of the present application further provides a device for distributing copyright earnings to a work user on the basis of a blockchain, as illustrated in FIG. 4, based on the method of distributing copyright earnings illustrated in FIG. 1, and the device is a node in the blockchain network.

The device includes:
a determination and publishing module 401 configured to: upon detecting that a target node performs a work use operation on the target work, determine at least a portion of virtual resources corresponding to the target work as a virtual resource increment corresponding to the target node and publish the virtual resource increment corresponding to the target node to the blockchain; and determine the at least a portion of virtual resources as a virtual resource decrement corresponding to the target work and publish the virtual resource decrement corresponding to the target work to the blockchain.

The determination and publishing module 401 is configured to, before publishing the virtual resource increment corresponding to the target node to the blockchain, determine that the work use operation satisfies a restriction condition pre-specified by a user corresponding to the publishing node.

The determination and publishing module 401 is configured to publish the virtual resource increment corresponding to the target node to the blockchain according to a publishing rule pre-specified by a user corresponding to the publishing node.

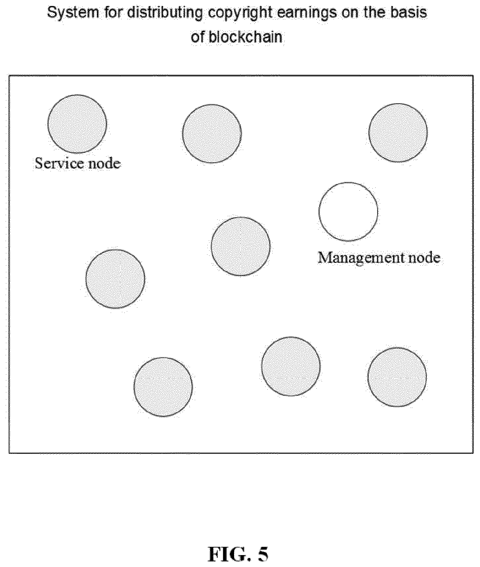

Based on the methods illustrated in FIG. 1 and FIG. 2, provided is a system for distributing copyright earnings on the basis of a blockchain; as illustrated in FIG. 5, the system includes a blockchain network at least consisting of a plurality of service nodes; the plurality of service nodes use virtual resources as a transfer medium to perform copyright-related transfers;
any node in the blockchain network executes the method illustrated in FIG. 1 or/and FIG. 2.

Moreover, the blockchain network further includes a management node.

An embodiment of the present application further provides a computer apparatus, which at least includes a memory, a processor, and a computer program stored on the memory and executable by the processor, wherein the processor executes the program to implement the methods illustrated in FIG. 1 and FIG. 2.

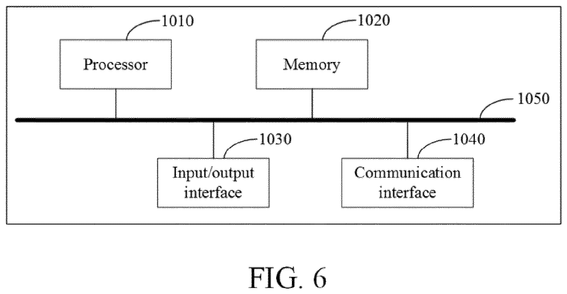

FIG. 6 illustrates a more specific structural schematic diagram of hardware of the computer apparatus provided by an embodiment of the present application. The apparatus may include a process 1010, a memory 1020, an input/output interface 1030, a communication interface 1040, and a bus 1050. The processor 1010, the memory 1020, the input/output interface 1030 and the communication interface 1040 are communicatively connected with each other within the apparatus through the bus 1050.

The processor 1010 may be implemented by adopting a general-purpose CPU (Central Processing Unit), a microprocessor, an ASIC (Application Specific Integrated Circuit), or one or more integrated circuits, etc., for executing related programs to implement the technical solution provided by an embodiment of the present application.

The memory 1020 may be implemented by adopting an ROM (Read Only Memory), an RAM (Random Access Memory), a static memory device, a dynamic memory device, etc. The memory 1020 may store an operating system and other application programs. When the technical solution provided by an embodiment of the present application is implemented by means of software or firmware, relevant program codes are stored in the memory 1020 and are called and executed by the processor 1010.

The input/output interface 1030 is used to connect with an input/output module for information input and output. The input/output module may be configured as a component in an apparatus (not shown), or may be externally connected to an apparatus to provide corresponding functions. Input apparatuses may include keyboards, mice, touch screens, microphones, various sensors, etc. Output apparatuses may include displays, speakers, vibrators, indicator lights, etc.

The communication interface 1040 is used to connect with a communication module (not shown) to achieve communication interactions between the apparatus and other apparatuses. The communication module may implement communication through a wired mode (for example, USB, network cable, etc.), and may also implement communication through a wireless mode (for example, mobile network, WiFi, Bluetooth, etc.).

The bus 1050 includes a path to transmit information between various components of the apparatus, such as the processor 1010, the memory 1020, the input/output interface 1030, and the communication interface 1040.

It should be noted that, although the processor 1010, the memory 1020, the input/output interface 1030, the communication interface 1040 and the bus 1050 of the apparatus are illustrated only, in the specific implementation process, the apparatus may further include other components necessary for normal operation. In addition, those skilled in the art can understand that the apparatus may only include components necessary to implement the technical solution provided by an embodiment of the present application, and does not necessarily include all components illustrated in the drawings.

An embodiment of the present application further provides a computer-readable storage medium on which a computer program is stored, and the program is executed by the processor to implement the methods illustrated in FIG. 1 and FIG. 2.

The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible by a computing device. According to the definitions herein, the computer-readable medium does not include transitory computer-readable media (transitory media), such as a modulated data signal and a carrier wave.

From the description of the above embodiment, it can be seen that those skilled in the art can clearly understand that an embodiment of the present application can be implemented by means of software and a necessary general-purpose hardware platform. Based on such understanding, the technical solution provided by an embodiment of the present application or the part that contributes to the prior art may be embodied in the form of a software product. The computer software product may be stored in a storage medium, such as ROM/RAM, disk, optical disk, etc., and include several instructions used to enable a computer apparatus (which may be a personal computer, a server, a network apparatus, or the like) to execute the method described in each embodiment or some parts of each embodiment of the present application.

The system, method, module, or unit illustrated in the embodiments may be specifically implemented by a computer chip or an entity, or a product having a certain function. A typical implementation device is a computer, the specific form of a computer may be a personal computer, a laptop computer, a cellular telephone, a camera phone, a smartphone, a personal digital assistant, a media player, a navigation device, an email transceiver device, a gaming console, a tablet computer, a wearable device, or a combination of any of these devices.

Each embodiment of the present application is described in a progressive manner, and the same or similar sections between various embodiments are described with reference to each other, each of which is focused on the differences from other embodiments. In particular, for a device or apparatus embodiment, as it is substantially similar to the method embodiment, the description is simpler, and for the relevant part, a reference may be made to the portion of the description of the method embodiment. The method embodiment described above is only exemplary, in which the modules described as discrete components may or may not be physically separated, and the functions of each module may be realized in the same or different software and/or hardware when the technical solution provided by an embodiment of the present application is implemented. Some or all modules may be selected to realize the purpose of the technical solution provided by the embodiment according to the actual needs. Those skilled in the art can understand and implement the present application without contributing any inventive labor.

What is described above is only the specific implementation mode of an embodiment of the present application. It should be pointed out that, with departing from the principle of an embodiment of the present application, those skilled in the art may make various improvements and modifications, which, however, should be regarded as included in the scope of protection of the present application.

## Claims

1. A method of distributing copyright earnings on the basis of a blockchain, a blockchain network comprising a plurality of service nodes, the plurality of service nodes using virtual resources as a transfer medium to perform copyright-related transfers, and the method comprising:
when any copyright-related transfer for a target work occurs, determining a copyright earning amount generated by the copyright-related transfer;
determining a publisher share amount and a user share amount according to a pre-agreed copyright earning sharing rule and the copyright earning amount, a sum of the publisher share amount and the user share amount being not greater than the copyright earning amount;
determining the publisher share amount of virtual resources as a virtual resource increment corresponding to a publishing node and publishing the virtual resource increment corresponding to the publishing node to the blockchain, the publishing node being a service node publishing the target work; and
determining the user share amount of virtual resources as a virtual resource increment corresponding to the target work and publishing the virtual resource increment corresponding to the target work to the blockchain, wherein virtual resources corresponding to the target work are used to distribute copyright earnings to a service node using the target work.

2. The method according to claim 1, wherein the copyright earning sharing rule specifically comprises:
a publisher share proportion and a user share proportion;
wherein determining the publisher share amount and the user share amount according to a pre-agreed copyright earning sharing rule and the copyright earning amount specifically comprises:
respectively multiplying the publisher share proportion and the user share proportion by the copyright earning amount to obtain the publisher share amount and the user share amount.

3. The method according to claim 1, wherein the blockchain network further comprises a management node;
the copyright earning sharing rule further comprises a manager share proportion;
wherein the method further comprises:
multiplying the manager share proportion by the copyright earning amount to obtain a manager share amount;
determining the manager share amount of virtual resources as a virtual resource increment corresponding to the management node and publishing the virtual resource increment corresponding to the management node to the blockchain.

4. A method of distributing copyright earnings to a work user on the basis of a blockchain based on the method of distributing copyright earnings according to any one of claims 1-3, the method of distributing copyright earnings to a work user on the basis of a blockchain comprising:
upon detecting that a target node performs a work use operation on the target work, determining at least a portion of virtual resources corresponding to the target work as a virtual resource increment corresponding to the target node and publishing the virtual resource increment corresponding to the target node to the blockchain; and
determining the at least a portion of virtual resources as a virtual resource decrement corresponding to the target work and publishing the virtual resource decrement corresponding to the target work to the blockchain.

5. The method according to claim 4, wherein before publishing the virtual resource increment corresponding to the target node to the blockchain, the method further comprises:
determining that the work use operation satisfies a restriction condition pre-specified by a user corresponding to the publishing node.

6. The method according to claim 4, wherein publishing the virtual resource increment corresponding to the target node to the blockchain specifically comprises:
publishing the virtual resource increment corresponding to the target node to the blockchain according to a publishing rule pre-specified by a user corresponding to the publishing node.

7. A device for distributing copyright earnings on the basis of a blockchain, a blockchain network comprising a plurality of service nodes, the plurality of service nodes using virtual resources as a transfer medium to perform copyright-related transfers; the device being a node in the blockchain network;
the device comprising:
a copyright earning amount determination module configured to, when any copyright-related transfer for a target work occurs, determine a copyright earning amount generated by the copyright-related transfer;
a share amount determination module configured to determine a publisher share amount and a user share amount according to a pre-agreed copyright earning sharing rule and the copyright earning amount, a sum of the publisher share amount and the user share amount being not greater than the copyright earning amount;
a publishing module configured to: determine the publisher share amount of virtual resources as a virtual resource increment corresponding to a publishing node and publish the virtual resource increment corresponding to the publishing node to the blockchain, the publishing node being a service node publishing the target work; and determine the user share amount of virtual resources as a virtual resource increment corresponding to the target work and publish the virtual resource increment corresponding to the target work to the blockchain, the virtual resources corresponding to the target work being used to distribute copyright earnings to a service node using the target work.

8. The device according to claim 7, wherein the copyright earning sharing rule specifically comprises:
a publisher share proportion and a user share proportion;
wherein the share amount determination module is configured to respectively multiply the publisher share proportion and the user share proportion by the copyright earning amount to obtain the publisher share amount and the user share amount.

9. The device according to claim 7, wherein the blockchain network further comprises a management node;
the copyright earning sharing rule further comprises a manager share proportion;
wherein the share amount determination module is configured to: multiply the manager share proportion by the copyright earning amount to obtain a manager share amount; and determine the manager share amount of virtual resources as a virtual resource increment corresponding to the management node and publish the virtual resource increment corresponding to the management node to the blockchain.

10. A device for distributing copyright earnings to a work user on the basis of a blockchain based on the method of distributing copyright earnings according to any one of claims 1-3, the device being a node in the blockchain network;
the device comprising:
a determination and publishing module configured to: upon detecting that a target node performs a work use operation on the target work, determine at least a portion of virtual resources corresponding to the target work as a virtual resource increment corresponding to the target node and publish the virtual resource increment corresponding to the target node to the blockchain; and determine the at least a portion of virtual resources as a virtual resource decrement corresponding to the target work and publish the virtual resource decrement corresponding to the target work to the blockchain.

11. The device according to claim 10, wherein the determination and publishing module is configured to, before publishing the virtual resource increment corresponding to the target node to the blockchain, determine that the work use operation satisfies a restriction condition pre-specified by a user corresponding to the publishing node.

12. The device according to claim 10, wherein the determination and publishing module is configured to publish the virtual resource increment corresponding to the target node to the blockchain according to a publishing rule pre-specified by a user corresponding to the publishing node.

13. A system for distributing copyright earnings on the basis of a blockchain, comprising a blockchain network at least consisting of a plurality of service nodes; the plurality of service nodes using virtual resources as a transfer medium to perform copyright-related transfers;
any node in the blockchain network executing the method according to any one of claims 1-6.

14. A computer apparatus, comprising a memory, a processor, and a computer program stored on the memory and executable by the processor, wherein the processor executes the program to implement the method according to any one of claims 1-3.

15. A computer apparatus, comprising a memory, a processor, and a computer program stored on the memory and executable by the processor, wherein the processor executes the program to implement the method according to any one of claims 4-6.
